# EUROPÄISCHE PATENTANMELDUNG

(11) **EP 2 116 832 A1**
(43) Veröffentlichungstag der Anmeldung: **11.11.2009**
(21) Anmeldenummer: 08008417.1
(22) Anmeldetag: 05.05.2008
(51) Int. Cl.: G01L 1/24

(54) **Faseroptische Sensoren für mechanische Größen**

(71) Anmelder: SIEMENS AKTIENGESELLSCHAFT, 80333 München (DE); Universität-Gesamthochschule Paderborn, 33098 Paderborn (DE)
(72) Erfinder: Koch, Markus, 33100 Paderborn (DE); Schrage, Hans-Jürgen, Dr., 59558 Lippstadt (DE)

(57) **Zusammenfassung**

Die Erfindung betrifft einen faseroptischen Sensor mit einem multimodalen optischen Lichtleiter, bei dem ein Abschnitt des Lichtleiters mit zwei mechanischen Klammern beaufschlagt wird. Mit den Klammern wird die zu messende mechanische Größe gekoppelt, und die Änderung des Übertragungsverhaltens des Lichtleiters wird als Maß für die mechanische Größe bestimmt. Auch kann eine Torsion oder Auslenkung der Faser ausgewertet werden. Weitere Verwendung als Intensitätsmodulator oder Musikinstrument.

## Beschreibung

Die Erfindung betrifft die Erfassung mechanischer Veränderungen durch Sensoren, die optische Lichtleiter verwenden.

Ein optischer Lichtleiter überträgt ein optisches Signal, indem das Signal im Kern des Leiters am Verlassen des Leiters durch Totalreflexion an dem Übergang zu einem äußeren Medium gehindert wird. Damit wird erreicht, dass die Übertragung wie mit einem elektrischen Kabel erfolgen kann. Dieses Prinzip ist allgemein bekannt und in vielen Lehrbüchern beschrieben. Im folgenden werden dabei Lichtleiter verwendet, die einen - gegenüber der verwendeten Wellenlänge - dicken Kern aufweisen und Multimode-Fasern genannt werden. Bei diesen bilden sich mehrere strukturell unterschiedliche Wellenverläufe im Kern aus.

Faseroptische Biegesensoren sind in der Patentschrift US 5,321,257 (Danisch) beschrieben. Hierbei werden auf einem Teil der Faser durch Störung der Oberfläche sensitive Bereiche erzeugt, die bei Beugung der Faser deutliche Unterschiede in der Übertragungsleistung beobachtet. Auch ist aus der US 5,818,982 bekannt, die Verluste bei Biegungen von optischen Fasern zur Wegbestimmung zu benutzen; die dort vorgeschlagene Lösung transformiert einen mechanischen Weg in eine Verformung einer relativ langen Faser, die zudem noch freien Raum benötigt. Außerdem sind für einen weitergehenden Einsatz die notwendige Modifikation des Lichtleiters durch die Einkerbungen sowie die schlechte Linearität und Empfindlichkeit der Anordnung nachteilig.

Die vorliegende Erfindung ermöglicht es, unveränderte Lichtleiter als Sensoren für Kraft- bzw. Wegmessungen mit guter Linearität einzusetzen. Ein besonderer Vorteil der Sensoren gegenüber bekannten Kraft- bzw. Wegesensoren besteht insbesondere in der Einsetzbarkeit in explosionsgefährdeten Bereichen, da an der Messstelle keine elektrischen Signale vorhanden sind und das Signal über den Lichtleiter ohne weiteres über längere Strecken zu einem opto-elektrischen Wändler geführt werden kann. Gleiches gilt für Bereiche mit starker ionisierender Strahlung oder sehr starken Magnetfeldern, die herkömmliche Sensoren stören können.

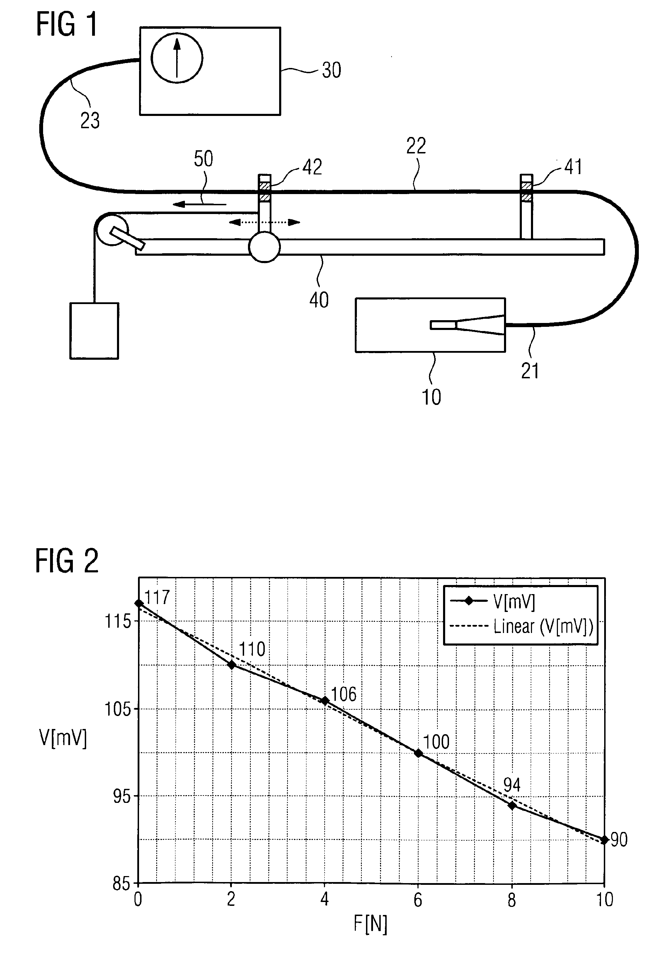

In Fig. 1 ist ein Versuchsaufbau skizziert, mit dem das Fig. 2 gezeigte Kraft-Intensitätsdiagramm ermittelt wurde. Verwendet wird ein Lichtleiter aus einer durchgehenden optischen Multimode-Faser (Raytek PFU-FB500) mit einem Anfangsteil 21, einem Mittelteil 22 und einem Endteil 23. In das Anfangsteil 21 wird durch eine Lichtquelle, hier eine rot leuchtende LED, ein Signal eingespeist. Das Endteil 23 führt zu einem optischen Empfänger (Photodiode), der eine der empfangenen Lichtleistung proportionale Ausgangsspannung abgibt.

Der Mittelteil 22 des Lichtleiters wird durch zwei mechanische Klammern 41 und 42 bestimmt, die an den Lichtleiter geklemmt sind. In dem Versuchsaufbau sind die Klammern auf einer optischen Bank 40 derart befestigt, dass die dem Sender 10 nahe Klammer fest und die dem Empfänger nahe Klammer 42 beweglich ist. Durch ein Gewicht und eine Umlenkrolle kann eine definierte Zugkraft 50 auf die bewegliche Klammer ausgeübt werden.

In Fig. 2 sind die folgenden Messergebnisse graphisch dargestellt:

**Tabelle 1**

| F[N] | V[mV] | d[mm] |
|---|---|---|
| 0 | 117 | 0 |
| 2 | 110 | 1 |
| 4 | 106 | 2 |
| 6 | 100 | 4,5 |
| 8 | 94 | 7 |
| 10 | 90 | 11 |

Dabei ist F die Zugkraft auf den Lichtleiter, und V die Spannung am Ausgang des Empfängers.

Damit ergibt sich ein nahzu linearer Zusammenhang zwischen der auf den Lichtleiterabschnitt 22 ausgeübten Zugkraft und der durch die Dehnung des Abschnitts reduzierten Übertragung des optischen Signals. In dem erprobten Kraftbereich liegt eine elastische Dehnung der optischen Faser vor, d.h. die Dehnungsmessung ist reversibel.

In dem Versuch wurde die Elastizität der Faser selbst verwendet, um die zu messende Kraft in eine Verformung der Faser umzusetzen. Selbstverständlich können für größere Kräfte auch die Klammern durch eine mechanische Feder, z.B. eine Schraubenfeder aus Federstahl, zusammengehalten werden.

Dann wird der Sensor effektiv als Längensensor verwendet, der die Verlängerung der Feder bestimmt. Es ist also gleichfalls möglich, Längenänderungen mit einem Lichtleiterabschnitt zu messen, indem die Längenänderungen durch die Klammern übertragen werden. Wegen des Hook'schen Gesetzes ist im Bereich der elastischen Dehnung die Längenänderung in gleichem Maße proportional der Ausgangsspannung wie bei der beschriebenen Kraftmessung. In der obigen Tabelle 1 sind die Längenänderungen in der dritten Spalte als Dehnung d aufgeführt.

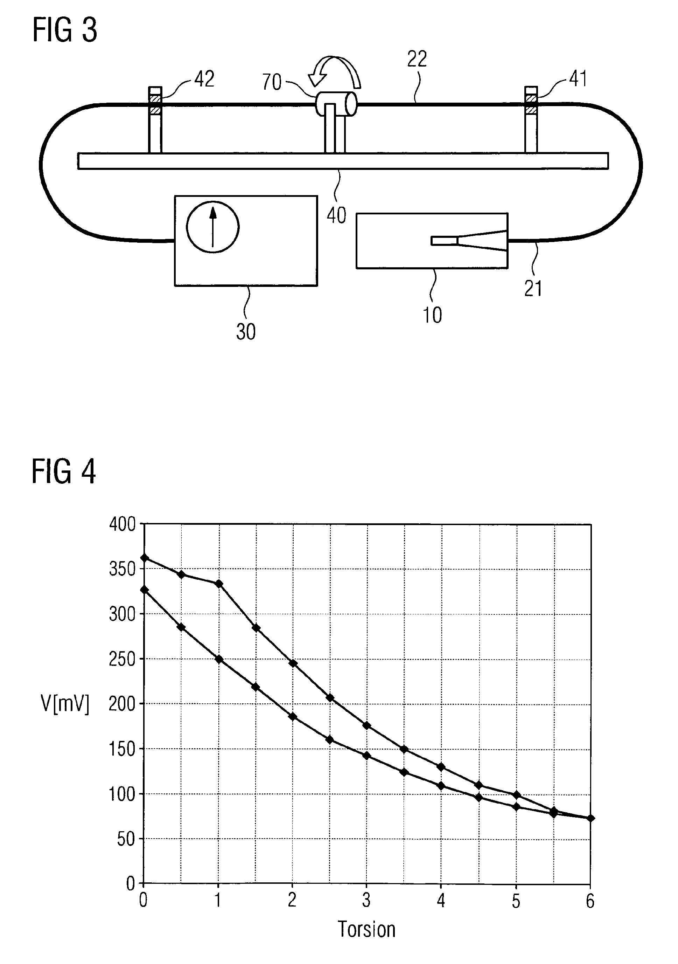

In Fig. 3 ist eine Anordnung zur Torsionsmessung skizziert. Die Elemente sind dieselben wie in Fig. 1, jedoch sind beide Klammern am Ende des Mittelteils 22 fest. In der Mitte des Mittelteils ist eine zusätzliche Klammer 70 gezeigt, die eine Rotation um die Achse der optischen Faser auf die Faser bewirkt. Durch die damit auf die Faser ausgeübte Torsion wird wiederum die übertragende Lichtleistung vermindert. Die entsprechenden Messungen sind in Fig. 4 dargestellt. Dabei sind Empfindlichkeit und Hysterese von der Vorspannung der Faser abhängig.

Anstatt den Lichtleiter axial zu dehnen oder durch Torsion zu beaufschlagen, kann auch eine Auslenkung in radialer Richtung erfolgen, und damit die Zugkraft im Lichtleiter bzw. eine Längenänderung des Lichtleiters bewirken. Für Messaufgaben ist diese Variante nicht bevorzugt, da die Linearität, allein schon aus geometrischen Gründen, schlechter ist.

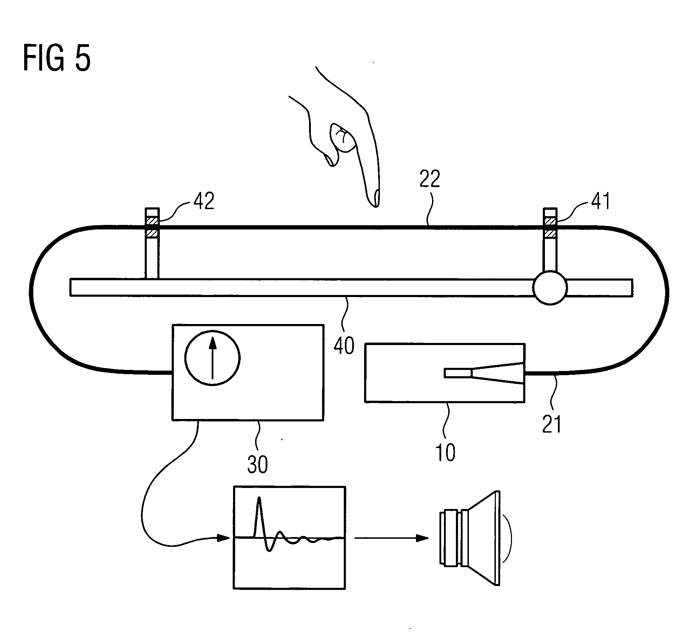

In Fig. 5 ist der Einsatz eines Lichtleiters als Intensitätsmodulator, insbesondere für akustische Signale, skizziert. Dies ist grundsätzlich mit allen zuvor dargestellten Anordnungen möglich, indem das in den Lichtleiter eingespeiste Signal mit Tonfrequenz moduliert ist. Eine Dehnung, Längenänderung, Torsion oder Auslenkung führen alle zu einer Reduktion der Stärke des modulierten Signals.

Gleichfalls in Fig. 5 skizziert ist die Verwendung der Erfindung als Musikinstrument mit Saiten. Dabei dient der Lichtleiter als Saite, die in bekannter Art gezupft oder gestrichen wird und dadurch zu Eigenschwingungen angeregt wird. Diese modulieren ein konstantes Signal und erzeugen so am

Ausgang des optischen Empfängers eine elektrische Schwingung, die über einen Schallwandler als Ton hörbar gemacht wird. Ein solches Musikinstrument ist unempfindlich gegen elektromagnetische Störungen, wie sie bei magnetischen Abnehmern von Gitarren mit Metallsaiten auftreten können. Ferner kann ein solches Instrument sehr günstig dadurch sein, dass die Saite gleichzeitig den Aufnehmer darstellt.

## Patentansprüche

1. Faseroptischer Sensor mit einem multimodalen optischen Lichtleiter, bei dem
- ein Abschnitt des Lichtleiters mit zwei mechanischen Klammern beaufschlagt wird,
- mit den Klammern eine zu messende mechanische Größe gekoppelt wird und
- eine Änderung eines Übertragungsverhaltens des Lichtleiters als Maß für die mechanische Größe verwendet wird.

2. Faseroptischer Sensor nach Anspruch 1, bei dem als mechanische Größe eine Änderung des Abstands der Klammern verwendet wird.

3. Faseroptischer Sensor nach Anspruch 1, bei dem als mechanische Größe eine Zugkraft der einen Klammer relativ zu der anderen Klammer verwendet wird.

4. Faseroptischer Sensor nach Anspruch 1, bei dem beide Klammern fixiert sind und der Lichtleiter axial ausgelenkt wird.

5. Faseroptischer Sensor mit einem multimodalen optischen Lichtleiter, bei dem ein Abschnitt des Lichtleiters mit zwei mechanischen Klammern fixiert wird, dazwischen eine dritte Klammer mit dem Lichtleiter derart verbunden ist, dass die dritte Klammer eine Rotation um die Achse des Lichtleiters bewirkt, und die Änderung des Übertragungsverhaltens des Lichtleiters als Maß für den Rotationswinkel verwendet wird.

6. Verwendung einer der Anordnungen nach den Ansprüchen 1 bis 5 als faseroptischer Modulator,
wobei ein akustisches Signal über den Lichtleiter übertragen wird, und die Intensitätsänderung zur Intensitätsmodulation des akustischen Signals verwendet wird.

7. Faseroptisches Musikinstrument,
bei dem mindestens eine Saite als optischer Lichtleiter ausgebildet ist, dessen Mittelteil mechanisch fixiert und gespannt ist, wobei durch Zupfen oder Streichen des Mittelteils der Lichtleiter zu Schwingungen angeregt wird, die als Änderungen des Übertragungsverhaltens abgetastet werden.
